# EUROPÄISCHE PATENTANMELDUNG

(11) **EP 0 952 285 A1**
(43) Veröffentlichungstag der Anmeldung: **27.10.1999**
(21) Anmeldenummer: 99107296.8
(22) Anmeldetag: 14.04.1999
(51) Int. Cl.: E05B 65/16, B62D 33/037

(54) **Drehstangenverschluss für Türen, Klappen oder dergleichen von Nutzfahrzeugaufbauten**

(30) Priorität: 16.04.1998 DE 29806855 U
(71) Anmelder: F. HESTERBERG & SÖHNE GmbH & Co. KG, D-58256 Ennepetal (DE)
(72) Erfinder: Breme, Stefan, 58339 Breckerfeld (DE); Deppe, Hans-Werner, 58135 Hagen (DE); Feinbier, Joachim, 58256 Ennepetal (DE); Gräfe, Hand-Gerd, 58332 Schwelm (DE); Kramme, Dieter, 58285 Gevelsberg (DE); Tiedtke, Henning, 58256 Ennepetal (DE); Wrobel, Margarethe, 58285 Gevelsberg (DE)
(74) Vertreter: Kneissl, Richard, Dr.

(57) **Zusammenfassung**

Die Erfindung geht aus von einem Drehstangenverschluß für Nutzfahrzeugaufbauten, der mindestens ein Eingriffsteil (14) an einem der Enden der Drehstange (5), das in der Schließstellung durch einen an einem festen Aubauteil angebrachten Gegenhalter (8) festgelegt ist, und eine Handhabe zum Drehen der Drehstange (5) aufweist. Wenn ein solcher bekannter Verschluß für Türen von beispielsweise Kofferaufbauten verwendet wird, dann kann es, wenn sich beim Transport Ladung gegen eine Türe legt, vorkommen, daß beim Öffnen des Verrschlusses die Türe aufgeschleudet wird und Ladung herunterfällt. Um dies zu vermeiden, besitzt beim erfindungsgemäßen Drehstangenverschluß die Bohrung (3) einer an der Türe befestigten Führung (1) eine Ausbuchtung (4) und die Drehstange (5) zwei Auskehlungen (6), so daß dazwischen eine Nase (7) gebildet wird. Die Nase (7) und die Ausbuchtung (4) weisen beide in der Schließstellung gegen die Türe. Bei Inndendruck rastet die Nase (7) in die Ausbuchtung (4) ein, und der Verschluß läßt sich solange nicht öffnen, bis der Innendruck beseitigt ist.

## Beschreibung

Die Erfindung bezieht sich auf einen Drehstangenverschluß für Türen, Klappen oder dergleichen von Nutzfahrzeugaufbauten, mit mindestens einem Eingriffsteil an einem der Enden der Drehstange, das in der Schließstellung durch einen an einem feststehenden Aufbauteil angebrachten Gegenhalter festgelegt ist, und mit einer Handhabe zum Drehen der Drehstange.

Drehstangenverschlüsse dieser Art werden insbesondere für Türen von Kofferaufbauten von Nutzfahrzeugen verwendet, wobei sie in aller Regel an beiden Enden der Drehstange ein Eingriffsteil aufweisen, das in der Schließstellung jeweil in einem eigenen Gegenhalter festgelegt ist.

Beim Transport bzw. bei unsachgemäßer Beladung des Fahrzeugs kommt es immer wieder vor, daß Ladung wahrend des Transports verrutscht und sich gegen die Türe legt. Wenn in einem solchen Fall der Drehstangenverschluß geöffnet wird, wird die Türe aufgeschleudert, wobei Ladung herunterfällt. Dabei kann es zu Verletzungen der Bedienungsperson kommen.

Der Erfindung lag die Aufgabe zugrunde, einen eingangs näher bezeichneten Drehstangenverschluß so weiterzubilden, daß er bei Innendruck gegen die Türe oder Klappe sich überhaupt nicht oder zumindest nur mit erhöhtem Kraftaufwand öffnen läßt.

Die erfindungsgemäße Lösung dieser Aufgabe besteht bei einem Drehstangenverschluß der eingangs naher skizzierten Art darin, daß die Drehstange im Bereich des Eingriffsteils durch eine Bohrung einer an der Türe oder Klappe befestigten Führung hindurchgeht, daß weiterhin im Bereich der Führung die Drehstange mit zwei Auskehlungen versehen ist, so daß zwischen diesen eine Nase gebildet wird, und daß die Bohrung der Führung eine Ausbuchtung aufweist, in die die Nase paßt, wobei die Nase und die Ausbuchtung in Schließstellung benachbart sind und gegen die Türe oder Klappe weisen.

Wenn beim Öffnen eines solchen Verschlusses Innendruck gegen die Türe oder Klappe herrscht, so rastet die Nase zu Beginn des Öffnungsvorgangs in die Ausbuchtung ein, da die Führung für die Drehstange zusammen mit der Türe oder Klappe nach außen gedrückt wird, das Eingriffsteil und der angenzende Teil der Drehstange aber nach wie vor vom Gegenhalter zurückgehalten werden.

Die Ausführungsform gemäß Anspruch 2 weist die Eigenschaft auf, daß die beim Öffnen des Verschlusses unter Innendruck gegeneinander geführten Flanken der Nase und der Ausbuchtung radial zur Drehstange verlaufen. Diese beiden Flanken werden in diesem Fall senkrecht gegeneinander gedrückt, so daß es zu einer vollständigen Verhinderung der weiteren Öffungsbewegung kommt. In diesem Fall muß entweder die gegen die Türe drückende Ladung entfernt oder die Türe vollständig zugerückt werden, damit sich die Drehstange und die Bohrung der Führung in eine Lage zueinander bringen lassen, bei der die Nase nicht in die Ausbuchtung einrastet, so daß der Verschluß vollständig geöffnet werden kann.

Die Ausführungsform gemäß Anspruch 3 zeichnet sich dadurch aus, daß die beim Öffnen des Verschlusses unter Innendruck gegeneinander geführten Flanken der Nase und der Ausbuchtung mit einem Winkel zum Radius der Drehstange verlaufen. Bei dieser Ausführungsform ist es bei Innendruck gegen die Türe oder Klappe möglich, daß durch erhöhten Kraftaufwand an der Handhabe die beiden Flanken aufeinander abgleiten und so die Drehstange in der Bohrung in die Normallage gedrückt wird, so daß der Verschluß vollständig geöffnet werden kann. Dies kann bei Kofferaufbauten günstig sein, in die man nicht auf anderem Weg gelangen kann, um die gegen die Türe drückende Ladung zu entfernen. Der Widerstand beim Öffnen des Verschlusses bei Innendruck gegen die Türe oder Klappe läßt sich durch entsprechende Wahl des Winkels, mit denen die beiden Flanken zum Radius der Drehstange verlaufen, auf einen geeigneten Wert einstellen. Er sollte jedoch groß genug gewählt werden, daß die Bedienungsperson die drohende Gefahr eindeutig erkennen kann.

Eine Ausführungsform des erfindungsgemäßen Drehstangenverschlusses wird nachstehend anhand der beigefügten Zeichnungen erläutert. In diesen zeigen:
Fig. 1 ein Ansicht der an einer Türe zu befestigenden Führung und des an einem festen Aufbauteil zu befestigenden Gegenhaltes sowie des mit der Drehstange verbundenen Verriegelungselements, wobei die Drehstange weggelassen und der Verschluß in der Schließstellung dargestellt ist;
Fig. 2 eine Aufsicht auf die in Fig. 1 dargestellten Teile mit geschnittener Drehstange;
Fig. 3 eine ähnliche Aufsicht wie Fig. 2 bei Beginn des Öffungsvorgangs;
Fig. 4 eine ähnliche Aufsicht wie Fig. 2, wobei die Lage der Teile zueinander beim weiteren Öffnungsvorgang unter Innendruck dargestellt ist; und
Fig. 5 eine ähnliche Aufsicht wie Fig. 2, wobei die Lage der Teile zueinander beim weiteren Öffnungsvorgang ohne Innendruck dargestellt ist.

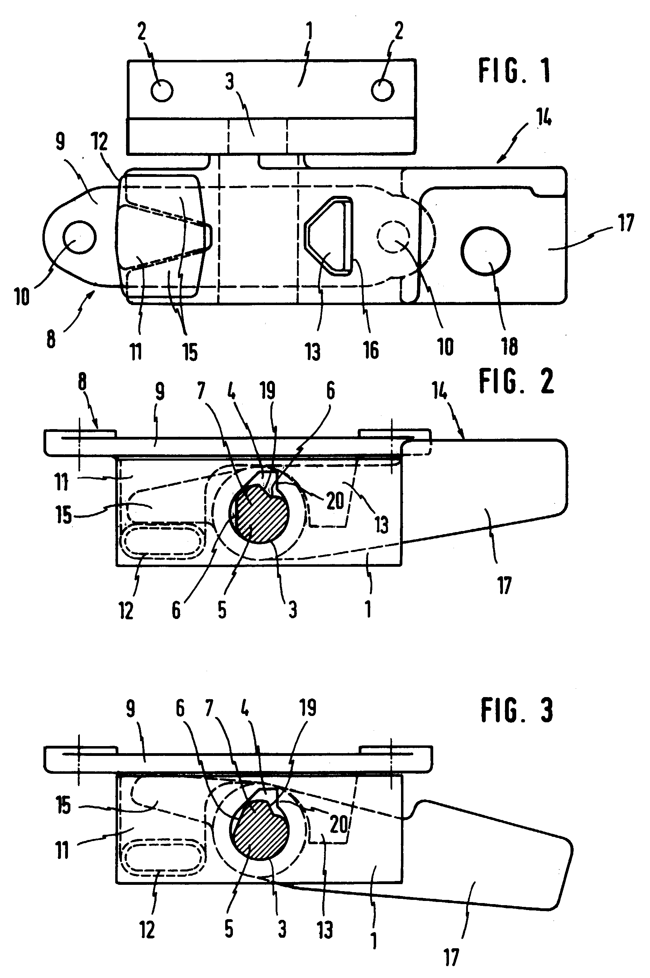

Gemäß den Fig. 1 bis 5 besitzt der Drehstangenverschluß eine an der Türe zu befestigende Führung 1 aus einer Winkelschiene, in der im senkrechten Schenkel zwei Löcher 2 zum Anschrauben an eine Türe eines Kofferaufbaus vorgesehen sind. Im waagrechten und von der Türe abstehenden Teil der Winkelschiene ist eine Bohrung 3 mit einer Ausbuchtung 4, die in Richtung auf die Türe weist, vorgesehen, in der eine Drehstange 5 geführt ist, die ihrerseits im Bereich der Führung 1 zwei Auskehlungen 6 besitzt, so daß zwischen diesen eine Nase 7 gebildet wird.

Der Gegenhalter 8 weist eine Grundplatte 9 auf, die zwei Löcher 10 besitzt, mit deren Hilfe der Gegenhalter 8 an ein feststehendes Teil des Fahrzeugaufbaus, beispielsweise am Fahrzeugrahmen, angeschraubt werden kann. Von der Grundplatte 9 steht ein keilförmiger Steg 11 ab, der an dem der Grundplatte 9 gegenüberliegenden Ende eine Platte 12 trägt. Weiterhin steht von der Grundplatte 9 ein Vorsprung 13 ab, der grob gesehen einen dreieckigen Querschnitt aufweist.

Das Eingriffsteil 14, das mit der Drehstange 5 verbunden ist, weist einen gabelförmigen Spannzapfen 15 auf, der im Bereich der Gabel eine dem keilförmigen Steg 11 entsprechende Kontur besitzt. Weiterhin besitzt es eine Öffung 16, in welche der Vorsprung 13 paßt. Durch diese Formgebung des Gegenhalters 8 und des Eingriffsteils 14 wird in der Schließstellung das Eingriffsteil 14 nicht nur in der waagrechten, sondern auch in der senkrechten Richtung durch den Gegenhalter 8 festgehalten. Das Eingriffsteil 14 besitzt darüber hinaus einen Fortsatz 17 mit einem Loch 18, mit dessen Hilfe eine für solche Verschlüsse übliche (nicht dargestellte) Handhabe schwenkbar befestigt werden kann.

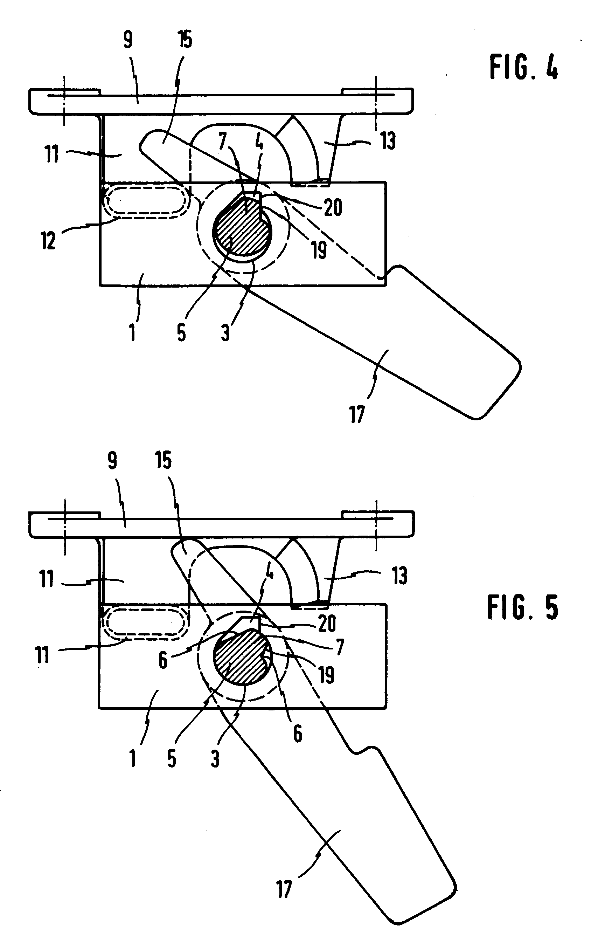

Bei der in Fig. 2 gezeigten Schließstellung umgreift der gabelförmige Spannzapfen 15 den keilförmigen Steg 11 und wird durch die an diesem ausgebildete Platte 12 niedergehalten. Bei der in Fig.3 gezeigten ersten Phase des Öffungsvorgans stützt sich der gabelförmige Spannzapfen 15 an der Grundplatte 9 des Gegenhalters 8 ab, so daß bei fehlendem Innendruck die Drehstange 5 beim weiteren Öffungsvorgang innerhalb der Bohrung 3 der Führung 1 in ihrer Normallage bleibt und zum vollständigen Öffnen die in Fig. 5 gezeigte Lage erreicht werden kann.

Herrscht jedoch Innendruck gegen die Türe, so erreichen die Komponenten die in Fig. 4 gezeigte Lage zueinander, bei der die Nase 7 an der Drehstange 5 in die Ausbuchtung 4 der Bohrung 3 einrastet und der weitere Öffungsvorgang gehemmt wird.

Bei der gezeigten Ausführungsform verlaufen die beim Öffungsvorgang gegeneinander geführten Flanken 19,20 der Ausbuchtung 4 bzw. der Nase 7 mit einem Winkel zum Radius der Drehstange 5, so daß es möglich ist, durch einen erhöhten Kraftaufwand an der Handhabe die beiden Flanken 19,20 zum Aufgleiten zu bringen, so daß der Verschluß trotz Innendrucks geöffnet werden kann.

## Patentansprüche

1. Drehstangenverschluß für Türen, Klappen oder dergleichen von Nutzfahrzeugaufbauten, mit mindestens einem Eingriffsteil (14) an einem der Enden der Drehstange (5), das in der Schließstellung durch einen an einem feststehenden Aufbauteil angebrachten Gegehalter (8) festgelegt ist, und mit einer Handhabe zum Drehen der Drehstange (5), **dadurch gekennzeichnet**, daß die Drehstange (5) im Bereich des Eingriffsteils (14) durch eine Bohrung (3) einer an der Türe oder Klappe befestigen Führung (1) hindurchgeht, daß weiterhin die Drehstange (5) im Bereich der Führung (1) mit zwei Auskehlungen (6) versehen ist, so daß zwischen diesen eine Nase (7) gebildet wird, und daß die Bohrung (3) der Führung (1) eine Ausbuchtung (4) aufweist, in die die Nase (7) paßt, wobei die Nase (7) und die Ausbuchtung (4) in der Schließstellung des Verschlusses benachbart sind und gegen die Türe oder Klappe weisen.

2. Drehstangenverschluß nach Anspruch 1, **dadurch gekennzeichnet**, daß die beim Öffnen des Verschlusses gegeneinander geführten Flanken (19,20) der Ausbuchtung (4) bzw. der Nase (7) radial zur Drehstange (5) verlaufen.

3. Drehstangenverschluß nach Anspruch 1, **dadurch gekennzeichnet**, daß die beim Öffnen des Verschlusses gegeneinander geführten Flanken (19,20) der Ausbuchtung (4) bzw. der Nase (7) mit einem Winkel zum Radius der Drehstange (5) verlaufen.
